(19) Europäisches Patentamt
European Patent Office
Office européen des brevets

(11) **EP 4 130 180 A1**

(12) **EUROPEAN PATENT APPLICATION**
published in accordance with Art. 153(4) EPC

(43) Date of publication:
**08.02.2023 Bulletin 2023/06**

(21) Application number: **21775784.8**

(22) Date of filing: **26.03.2021**

(51) International Patent Classification (IPC):
**C09J 4/02** (1990.01)      **C09J 11/06** (1990.01)
**C09J 175/04** (1990.01)

(52) Cooperative Patent Classification (CPC):
**C09J 4/00; C09J 4/06; C09J 11/06; C09J 175/02;
C09J 175/04**

(86) International application number:
**PCT/JP2021/013074**

(87) International publication number:
**WO 2021/193960 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 JP 2020057569**

(71) Applicant: **The Yokohama Rubber Co., Ltd.
Tokyo 105-8685 (JP)**

(72) Inventors:
- **KAGEYAMA, Hirokazu**
  **Hiratsuka-shi, Kanagawa 254-8601 (JP)**
- **KIMURA, Kazushi**
  **Hiratsuka-shi, Kanagawa 254-8601 (JP)**
- **YAMAMOTO, Yutaro**
  **Hiratsuka-shi, Kanagawa 254-8601 (JP)**

(74) Representative: **Grünecker Patent- und
Rechtsanwälte
PartG mbB
Leopoldstraße 4
80802 München (DE)**

(54) **TWO-LIQUID CURABLE ADHESIVE COMPOSITION**

(57)    A two-part curable adhesive composition contains a main agent (A) containing a urethane prepolymer (a1) and a (meth)acrylic compound (a2) having at least two aromatic rings in a molecule, and a curing agent (B) containing a polyol compound (b1) and a polyamine compound (b2). The urethane prepolymer (a1) is obtained by reacting a raw material polyisocyanate and a polyol compound (a3) at an index of 2.05 to 12. The raw material polyisocyanate is an isocyanate having at least one aromatic ring in a molecule. The main agent (A) further contains a remaining polyisocyanate (a4). The two-part curable adhesive composition contains a silane compound (X) in at least one of the main agent (A) or the curing agent (B).

EP 4 130 180 A1

**Description**

Technical Field

The present invention relates to a two-part curable adhesive composition having a main agent and a curing agent.

Background Art

In structural members such as automotive bodies, components formed from different materials may be bonded together using an adhesive. By bonding through the adhesive, distortion and warpage can be suppressed even if a difference of coefficient of thermal expansion between the components is large. An adhesive used for such a purpose is required to have good elongation at break so that the difference of thermal expansion between parts can be absorbed.
In Patent Document 1, a polyurethane-based curable composition using a polyol (A) and a polyisocyanate (B) as essential constituents is known as a curable composition that can exhibit high strength and high elongation. The curable composition of Patent Document 1 further contains a predetermined amount of polymer microparticles (C) having a core-shell structure including at least two layers, which are a core layer and a shell layer, per 100 parts by mass of total of the component (A) and the component (B), the core layer of the component (C) having a glass transition temperature (Tg) higher than a predetermined temperature, and the cured product has an elongation at the maximum tensile stress of higher than 47%.

Citation List

Patent Literature

Patent Document 1: WO 2017/099196

Summary of Invention

Technical Problem

An adhesive used for bonding parts of a structural member is required to have good adhesive strength in addition to elongation at break. In particular, good adhesive strength to a metal material is required. However, when a known polyurethane-based adhesive is used for such a purpose, adhesive strength is not satisfactory.
An object of the present invention is to provide a polyurethane-based adhesive composition having excellent elongation at break and adhesive strength.

Solution to Problem

An aspect of the present invention is a two-part curable adhesive composition comprising:

a main agent (A) containing a urethane prepolymer (a1) and a (meth)acrylic compound (a2) having at least two aromatic rings in a molecule, and
a curing agent (B) containing a polyol compound (b1) and a polyamine compound (b2),
the urethane prepolymer (a1) being obtained by reacting a raw material polyisocyanate and a polyol compound (a3) having at least one hydroxy group in a molecule, an equivalent ratio of isocyanate groups in the raw material polyisocyanate to a hydroxy group in the polyol compound (a3) is from 2.05 to 12, the polyol compound (a3) being completely converted into monomer units of the urethane prepolymer (a1),
the raw material polyisocyanate is an isocyanate having at least one aromatic ring in a molecule,
the main agent (A) further containing, in addition to the urethane prepolymer (a1), a remaining polyisocyanate (a4) which is a remainder of the raw material polyisocyanate that has not been reacted with the polyol compound (a3), and
at least one of the main agent (A) or the curing agent (B) containing a silane compound (X).

An equivalent ratio of isocyanate groups in the main agent (A) to active hydrogen groups in the curing agent (B) is preferably from 0.8 to 4, and
an equivalent ratio of the isocyanate groups in the main agent (A) to amino groups in the polyamine compound (b2) is preferably from 1.2 to 6.
The polyol compound (a3) is preferably at least one selected from the group consisting of polyester polyol, polytetramethylene ether glycol, polycarbonate polyol, polycaprolactone polyol, and partially modified products obtained by partially modifying these.

The polyol compound (b1) is preferably at least one selected from the group consisting of polyoxypropylene glycol, polybutadiene polyol, polyisoprene polyol, polyacrylic polyol, and partially modified products obtained by partially modifying these.

The silane compound (X) is preferably a silane compound having at least one isocyanate group in a molecule.

In the two-part curable adhesive composition, from 0.1 to 30 mass% of the (meth)acrylic compound (a2) is preferably contained.

A tensile lap-shear strength in accordance with JIS K6850 of a cured product obtained by curing the two-part curable adhesive composition is preferably 10 MPa or greater.

Advantageous Effects of Invention

According to the two-part curable adhesive composition of the aspect described above, a polyurethane-based adhesive composition having excellent elongation at break and adhesive strength can be provided.

Description of Embodiments

A two-part curable adhesive composition of the present embodiment will be explained below. The present embodiment includes various embodiments described below.

Adhesive Composition

The two-part curable adhesive composition (hereinafter, also simply referred to as adhesive composition) of the present embodiment has a main agent (A) and a curing agent (B).

Main Agent (A)

The main agent (A) contains a urethane prepolymer (a1) and a (meth)acrylic compound (a2).

The urethane prepolymer (a1) is obtained by reacting a raw material polyisocyanate and a polyol compound (a3). Accordingly, the urethane prepolymer (a1) contains a monomer unit of the polyisocyanate and a monomer unit of the polyol compound (a3). Specifically, an equivalent ratio (hereinafter, also referred to as index) of isocyanate groups in the raw material polyisocyanate to a hydroxy group in the polyol compound (a3) is from 2.05 to 12, and this reaction is performed so that the polyol compound (a3) is completely converted into monomer units of the urethane prepolymer (a1).

By setting the index to 2.05 or greater so that the amount of the isocyanate groups is excessively more than the amount of the hydroxy groups, many hard segments which provide hydrogen bonding with a metal are formed in the cured product. Furthermore, since the index is 2.05 or greater, a large amount of remaining polyisocyanate (isocyanate remaining after the reaction between the raw material polyisocyanate and the polyol compound) that easily reacts with metals is contained in the main agent (A). Accordingly, by setting the index to 2.05 or greater, a cured product having excellent adhesive strength to metals, specifically, a cured product having an adhesive strength of 10 MPa or greater, tends to be obtained. In the present specification, the adhesive strength means tensile lap-shear strength in accordance with JIS K6850.

Furthermore, by setting the index to 2.05 or greater so that the amount of the isocyanate groups is excessively more than the amount of the hydroxy groups, the remaining polyisocyanate can be adequately reacted with the curing agent (B). This makes it easier to obtain a cured product having excellent elongation at break, specifically, a cured product having an elongation at break of 100% or greater. In the present specification, the elongation at break means an elongation at the time of rupture in accordance with JIS K6251.

Furthermore, setting the index to 2.05 or greater makes it easier to obtain a cured product having excellent strength at break, specifically, a cured product having a strength at break of 10 MPa or greater, because of a large amount of hard segments in the cured product. In the present specification, the strength at break means tensile strength in accordance with JIS K6251.

The index is preferably 3 or greater and more preferably 4 or greater. On the other hand, in a case where the equivalent ratio is too large, the elongation at break may be too low. Thus, the equivalent ratio is 12 or less, preferably 10 or less and more preferably 8 or less.

According to the adhesive composition of the present embodiment, after the raw material polyisocyanate is added to the polyol compound (a3), a product resulting from reaction with the active hydrogen groups of the curing agent (B) and a product resulting from reaction with the active hydrogen groups of the curing agent (B) after the raw material polyisocyanate remains without reacting with the polyol compound (a3) are formed in the cured product. Thus, because of the time lag between these reactions of isocyanate groups and coexistence of the polyol compound (a3) with the polyol compound (b1) of the curing agent (B) and because a material obtained by reacting the (meth)acrylic compound (a2) with an active hydrogen group of the curing agent (B) is formed in a cured product, a cured product having a characteristic structure is obtained. Such a cured product formed on a metal surface can be in a form in which at least one of a soft segment or a hard segment is bonded to the metal via the (meth)acrylic compound (a2) or the silane compound (X).

The raw material polyisocyanate has at least one, preferably two or more, isocyanate groups in a molecule. The raw material polyisocyanate is an isocyanate having at least one aromatic ring in a molecule. Since such a raw material polyisocyanate is contained in the adhesive composition, the strength at break of a cured product is improved. Furthermore, such a raw material polyisocyanate has good interaction with the (meth)acrylic compound (a2).

As the raw material polyisocyanate, a known polyisocyanate compound can be used, and examples thereof include aromatic polyisocyanates such as TDI (e.g., 2,4-tolylene diisocyanate (2,4-TDI) and 2,6-tolylene diisocyanate (2,6-TDI)), MDI (e.g., 4,4'-diphenylmethane diisocyanate (4,4'-MDI) and 2,4'-diphenylmethane diisocyanate (2,4'-MDI)), 1,4-phenylene diisocyanate, polymethylene polyphenylene polyisocyanate, xylylene diisocyanate (XDI), tetramethylxylylene diisocyanate (TMXDI), tolidine diisocyanate (TODI), 1,5-naphthalene diisocyanate (NDI), and triphenylmethane triisocyanate.

Among these, the raw material polyisocyanate is preferably an MDI.

Such a polyisocyanate may be used alone, or two or more types of these polyisocyanates may be used in combination.

According to one embodiment, the raw material polyisocyanate preferably contains at least one of diphenylmethane diisocyanate or polymeric methane diisocyanate from the perspective of improving reaction activity and exhibiting good strength when cured.

The polyol compound (a3) is a polyol compound having at least one, preferably at least two, hydroxy groups in a molecule.

According to one embodiment, the number average molecular weight of the polyol compound (a3) is preferably 250 or greater, and more preferably 500 or greater. When the number average molecular weight of the polyol compound is less than the range described above, the elongation at break of the cured product decreases, and the cured product may become too hard. The number average molecular weight of the polyol compound (a3) is preferably 3000 or less.

From the perspective of contribution to improvement of adhesive strength of the cured product, as the polyol compound (a3), preferably, at least one selected from the group consisting of polyester polyol, polytetramethylene ether glycol, polycarbonate polyol, polycaprolactone polyol, and partially modified products obtained by partially modifying these is used.

Examples of the polyester polyol include condensation products (condensed polyester polyols) of low-molecular-weight polyhydric alcohols with a polybasic carboxylic acid.

Specific examples of the low-molecular-weight polyhydric alcohols include low-molecular-weight polyols such as ethylene glycol (EG), diethylene glycol, propylene glycol (PG), dipropylene glycol, 1,3-butanediol, 1,4-butanediol, pentanediol, neopentyl glycol, hexanediol, cyclohexanedimethanol, glycerin, 1,1,1-trimethylolpropane (TMP), 1,2,5-hexanetriol, and pentaerythritol; saccharides such as sorbitol; and the like.

Examples of the polybasic carboxylic acid include glutaric acid, adipic acid, azelaic acid, fumaric acid, maleic acid, pimelic acid, suberic acid, sebacic acid, phthalic acid, terephthalic acid, isophthalic acid, dimer acid, pyromellitic acid, other low-molecular-weight carboxylic acids, oligomeric acids, castor oil, and hydroxycarboxylic acids such as a reaction product of castor oil with ethylene glycol (or propylene glycol).

The polycarbonate polyol is produced through, for example, a reaction such as a methanol removal condensation reaction of polyol and dimethyl carbonate, a phenol removal condensation reaction of polyol and diphenyl carbonate, or an ethylene removal glycol condensation reaction of polyol and ethylene carbonate. Examples of the polyol used in these reactions include various saturated or unsaturated glycols such as 1,6-hexanediol, diethylene glycol, triethylene glycol, propylene glycol, 1,3-butanediol, 1,4-butanediol, neopentyl glycol, pentanediol, 3-methyl-1,5-pentanediol, octanediol, 1,4-butynediol, dipropylene glycol, tripropylene glycol, and polytetramethylene ether glycol; and alicyclic glycols such as 1,4-cyclohexane diglycol and 1,4-cyclohexane dimethanol.

Examples of the polycaprolactone polyols include those obtained by ring-opening polymerization of a lactone such as ε-caprolactone, α-methyl-ε-caprolactone, or ε-methyl-ε-caprolactone with a suitable polymerization initiator, and having hydroxy groups at both terminal ends.

Examples of the partially modified product include products obtained by introducing a modifying group into a molecule of polyester polyol, polytetramethylene ether glycol, polycarbonate polyol, or polycaprolactone polyol by copolymerization or the like. Examples of such a partially modified product include products in which a part of repeating units in a molecule are substituted by modified groups. Examples of the modifying group include alkylene groups. Specific examples of the alkylene group preferably include an ethylene group, a 1,2-propylene group, a 1,3-propylene group, a 2-methyl-1,3-propylene group, a 2,2-dimethyl-1,3-propylene group, a pentamethylene group, and a hexamethylene group. The number of carbons of the alkylene group is, for example, from 2 to 10. The modification amount is, for example, from 3 to 50 wt.%. The type and modification amount of the alkylene group are not limited to those described above and are appropriately selected. Specific examples of the partially modified products include modified polytetramethylene ether glycol. Examples of the modified polytetramethylene ether glycol include those in which a part of $-(OH_2)_4$-O- in a molecule of a typical polytetramethylene ether glycol is substituted by -R-O-. R is preferably an alkylene group of the specific example described above having a number of carbons in the range described above. This modified polytetramethylene ether glycol can be produced by, for example, copolymerization of tetrahydrofuran and a diol using a heteropolyacid as a catalyst, or copolymerization of a diol or a cyclic ether which is a condensation product of a diol, and a butanediol.

The number average molecular weight of the urethane prepolymer (a1) is preferably 1,000 or greater and 15,000 or less, and more preferably 1,000 or greater and 10,000 or less.

Here, the number average molecular weight is a number average molecular weight (expressed in calibration with polystyrene) measured by gel permeation chromatography (GPC), and for the measurement, tetrahydrofuran (THF) and N,N-dimethylformamide (DMF) are preferably used as solvents.

The (meth)acrylic compound (a2) contains at least one, preferably two or more, selected from the group consisting of methacryloyl groups and acryloyl groups in a molecule. In the present specification, the (meth)acrylic compound (a2) means a methacrylic compound and/or acrylic compound. The methacryloyl group or acryloyl group is, for example, added to a molecular terminal.

The (meth)acrylic compound (a2) contains at least two aromatic rings in a molecule. According to the study of the present inventors, it was found that, by blending the (meth)acrylic compound (a2) described above together with the silane compound (X) described below in the adhesive composition, the effects of improving adhesive strength of the cured product to metals can be achieved. Furthermore, the (meth)acrylic compound (a2) described above has good interaction with the polyamine compound (b2) having an aromatic ring, especially a primary aromatic polyamine. When the number of aromatic rings in a molecule is one or less, because of reduction in $\pi$-$\pi$ interaction with a urethane part and the like, the effect of improving adhesive strength is small. An example of the preferred aromatic ring is a benzene ring.

The (meth)acrylic compound (a2), because of its high reactivity with the polyamine compound (b2) of the curing agent (B), is blended in the main agent (A).

Examples of the preferred (meth)acrylic compound (a2) include compounds having a structure like bisphenol A, in which two aromatic rings are bonded to carbon at 2-position of propane, that is, bis A-type (meth)acrylic compounds.

According to one embodiment, the (meth)acrylic compound (a2) preferably contains at least one oxyalkylene structure or polyalkylene glycol structure in a molecule. Since the (meth)acrylic compound (a2) having such a structure has a high hydrophilicity, the (meth)acrylic compound (a2) tends to react with a metal, and the effect of improving adhesive strength of the cured product is increased. The oxyalkylene structure or polyalkylene glycol structure can be obtained by, for example, addition of an alkylene oxide to bisphenol A. Examples of the alkylene oxide include ethylene oxide and propylene oxide. The oxyalkylene structure or polyalkylene glycol structure is preferably bonded to each of aromatic rings of the (meth)acrylic compound (a2) while the other side is bonded to a methacryloyl group or acryloyl group. The number of repeating units in the polyalkylene glycol structure is, for example, from 2 to 5.

The position of the oxyalkylene structure or polyalkylene glycol structure on a benzene ring as the aromatic ring is preferably the para position.

In the bis A-type (meth)acrylic compound, two structures bonded to carbon at 2-position of propane may be identical or different.

As the (meth)acrylic compound (a2), specifically, for example, dimethacrylate of an ethylene oxide adduct of bisphenol A, diacrylate of an ethylene oxide adduct of bisphenol A, dimethacrylate of a propylene oxide adduct of bisphenol A, and diacrylate of a propylene oxide adduct of bisphenol A can be used.

Such a (meth)acrylic compound (a2) can be used alone, or a combination of two or more types of these (meth)acrylic compound (a2) can be used.

From 0.1 to 30 mass% of the (meth)acrylic compound (a2) is preferably contained in the adhesive composition. When the content of the (meth)acrylic compound (a2) is less than 0.1 mass%, the effect of improving adhesive strength of the cured product cannot be achieved adequately. When the content of the (meth)acrylic compound (a2) is more than 30 mass%, the characteristics of a polyurethane-based adhesive cannot be adequately exhibited, and improvement of elongation at break and strength at break of the cured product becomes difficult.

In addition to the urethane prepolymer (a1), the main agent (A) further contains a remaining polyisocyanate (a4).

The remaining polyisocyanate (a4) is the remainder of the raw material polyisocyanate that has not been reacted with the polyol compound (a3). Since the remaining polyisocyanate (a4) is contained in the main agent (A), reaction with the curing agent (B) can be rapidly performed. Accordingly, the curing time can be shortened, foaming due to reaction of the remaining polyisocyanate (a4) with water can be suppressed, and deterioration in tensile properties, such as elongation at break and strength at break, of the cured product can be suppressed.

Curing Agent (B)

The curing agent (B) contains a polyamine compound (b2) and a polyol compound (b1).

Since the polyamine compound (b2) exhibits a high reaction rate with an isocyanate group and the (meth)acrylic compound (a2), and thus the reaction of the polyamine compound (b2) with the main agent (A) proceeds rapidly. In this process, the urethane prepolymer (a1) grows while being cured. Furthermore, in the adhesive composition in which the main agent (A) and the curing agent (B) are mixed, heat is generated as the polyamine compound (b2) and the main agent (A) reacts, and thus the reaction between the polyol compound (b1) and the main agent (A) is promoted. Since the reaction promoting effect described above by the polyamine compound (b2) can be achieved, even when an excessive amount of isocyanate groups is contained in the main agent (A), foaming can be suppressed, and deterioration of the physical properties of the cured product can be suppressed.

The polyamine compound (b2) has two or more amino groups in a molecule. As the polyamine compound (b2), a known polyamine compound can be used.

Specific examples of the polyamine compound (b2) include aliphatic polyamines such as ethylenediamine, propylenediamine, butylenediamine, diethylenetriamine, triethylenetriamine, triethylenetetramine, tetraethylenepentamine, pentaethylenehexamine, hexamethylenediamine, trimethylhexamethylenediamine, 1,2-propanediamine, iminobispropylamine, methyliminobispropylamine, and 1,5-diamino-2-methylpentane (MPMD, available from Dupont K.K.); aromatic polyamines such as meta-phenylenediamine, ortho-phenylenediamine, para-phenylenediamine, m-xylylenediamine (MXDA), diaminodiphenyl methane, diaminodiphenyl sulfone, diamino diethyldiphenylmethane, diethylmethylbenzenediamine, 2-methyl-4,6-bis(methylthio)-1,3-benzenediamine, 4,4'-methylenebis(2-chloroaniline), 4,4'-methylenebis(3-chloro-2,6-diethylaniline), trimethylenebis(4-aminobenzoate), bis(4-amino-2,3-dichlorophenyl) methane; N-aminoethylpiperazine; monoamine having an ether bond in its main chain, such as 3-butoxyisopropylamine; diamines having a polyether backbone, that is exemplified by JEFFAMINE EDR148 available from Sun Techno Chemicals Co., Ltd.; alicyclic polyamines such as isophoronediamine, 1,3-bisaminomethylcyclohexane (1,3BAC, available from Mitsubishi Gas Chemical Company, Inc.), 1-cyclohexylamino-3-aminopropane, and 3-aminomethyl-3,3,5-trimethyl-cyclohexylamine; diamines having a norbornane backbone, such as norbornanediamine (NBDA, available from Mitsui Chemicals, Inc.); polyamide amines having an amino group at a molecular terminal of polyamide; 2,5-dimethyl-2,5-hexamethylene diamine, menthenediamine, 1,4-bis(2-amino-2-methylpropyl)piperazine, JEFFAMINE D230 and JEFFAMINE D400 having polypropylene glycol (PPG) as a backbone, available from Sun Techno Chemicals Co., Ltd.. These polyamine compounds may be used alone or may be used in a combination of two or more types.

According to one embodiment, the polyamine compound (b2) is preferably the aromatic polyamine described above. With a polyamine other than the aromatic polyamine, the rate of reaction with the main agent (A) is too high, and the adhesive strength and elongation at break of the cured product may not be adequately improved. Furthermore, with a polyamine other than the aromatic polyamine, it is difficult to achieve good interaction between the (meth)acrylic compound (a2) having aromatic rings and the remaining polyisocyanate (a4). From this perspective, the polyamine compound (b2) is particularly preferably a primary aromatic polyamine among the aromatic polyamines.

According to one embodiment, from the perspective of increasing the rate of reaction with isocyanate groups in the main agent (A), the polyamine compound (b2) preferably has a number average molecular weight of less than 500.

The polyol compound (b1) has at least two hydroxy groups in a molecule. The number average molecular weight of the polyol compound (b1) is preferably 500 or greater, and more preferably 1000 or greater. Since the polyol compound (b1) is contained in the curing agent (B), elongation at break of the cured product can be enhanced. When the number average molecular weight of the polyol compound (b1) is less than 500, the elongation at break of the cured product is reduced, and the cured product may become too hard.

Furthermore, the polyol compound (b1) slowly reacts with isocyanate groups in the main agent (A) compared to the polyamine compound (b2), and thus does not lead to an excessively short curing time and contributes to improvement of workability.

The polyol compound (b1) is preferably a polyol compound different from the polyol compound (a3). When the polyol compound (b1) and the polyol compound (a3) are the same polyol compound, it is difficult to provide adhesive strength and strength at break of the cured product in a compatible manner.

The difference between the SP value of the polyol compound (a3) and the SP value of the polyol compound (b1) is from 0.1 to 4.0 $(J/cm^3)^{1/2}$. By setting the SP values of both of the polyol compounds to be 0.1 $(J/cm^3)^{1/2}$ or greater, the adhesive strength and elongation at break of the cured product are likely to be provided in a compatible manner, and by setting the SP values to be 4.0 $(J/cm^3)^{1/2}$ or less, compatibility between the main agent (A) and the curing agent (B) is ensured. The difference between the SP values is preferably from 0.1 to 2.0 $(J/cm^3)^{1/2}$, and more preferably from 0.1 to 1.0 $(J/cm^3)^{1/2}$.

In the present specification, an SP value refers to a value $\delta$ calculated by the following Small's equation.

$$\delta = d\Sigma G/M$$

In the equation, d refers to density, G refers to intermolecular gravitational constant (Small constant), and M refers to a molecular weight.

The SP value of each of the polyol compound (a3) and polyol compound (b1) is from 14.0 to 21.0 $(J/cm^3)^{1/2}$. When the SP values of the polyol compound (a3) and the polyol compound (b1) are not in the ranges described above, the polarity of each of the polyol compounds is too high or low, and thus the effect of improving adhesive strength and elongation at break of the cured product is impaired. Each of the SP values of the polyol compound (a3) and the polyol compound (b1) is preferably from 14.5 to 20.5 $(J/cm^3)^{1/2}$, and more preferably from 14.0 to 20.0 $(J/cm^3)^{1/2}$.

From the perspective of contribution to improvement of elongation at break of the cured product, the polyol compound (b1) is preferably at least one selected from the group consisting of polyoxypropylene glycol, polybutadiene polyol, polyisoprene polyol, polyacrylic polyol, and partially modified products obtained by partially modifying these. The modifying group in the partially modified product is identical to the modifying group described for the polyol compound (a3).

The equivalent ratio of the isocyanate groups in the main agent (A) to the active hydrogen groups in the curing agent (B) (hereinafter, also referred to as isocyanate group/active hydrogen group ratio) is preferably from 0.8 to 4. In the present specification, the active hydrogen groups in the curing agent (B) refer to hydroxy groups in the polyol compound (b1) and amino groups in the polyamine compound (b2). The isocyanate groups in the main agent (A) refer to isocyanate groups in the urethane prepolymer (a1) and in the remaining polyisocyanate (a4).

According to one embodiment, even when the isocyanate group/active hydrogen group ratio is changed in the range of from 0.8 to 4, the adhesive strength and elongation at break of the cured product do not greatly change. Specifically, a ratio of change of the adhesive strength and the elongation at break is suppressed to within $\pm$ 20% with respect to the adhesive strength and the elongation at break when the mixing ratio (mass ratio) of the main agent (A) to the curing agent (B) is 1:1. According to one embodiment, the mixing ratio (mass ratio) of the main agent (A) to the curing agent (B) can be set to from 4:6 to 6:4.

The equivalent ratio of the isocyanate groups in the main agent (A) to the amino groups in the polyamine compound (b2) (hereinafter, also referred to as isocyanate group/amino group ratio) is preferably from 1.2 to 6. In a case where the isocyanate group/amino group ratio is less than 1.2, the isocyanate groups in the main agent (A) are less likely to react with the hydroxy groups in the polyol compound (b 1), and the elongation at break of the cured product is difficult to be improved. On the other hand, in a case where the isocyanate group/amino group ratio exceeds 6, a curing rate of the adhesive composition is low, and the possibility of foaming increases.

According to one embodiment, the equivalent ratio of the isocyanate groups in the main agent (A) to the hydroxy groups in the polyol compound (b1) (hereinafter referred to as isocyanate group/hydroxy group ratio) is preferably from 2 to 12. In a case where the isocyanate group/hydroxy group ratio is less than 2, when the isocyanate group/amino group ratio is small, the curing rate is too high, and the elongation at break of the cured product decreases. On the other hand, when the isocyanate group/hydroxy group ratio is less than 2 and the isocyanate group/amino group ratio is large, the curing rate is slow, foaming tends to occur, and thus it is difficult to improve the adhesive strength. In a case where the isocyanate group/hydroxy group ratio exceeds 12, foaming tends to occur.

According to one embodiment, the polyol compound (b1) preferably contains at least one of polyethylene glycol or polypropylene glycol. Furthermore, according to one embodiment, the polyol compound (b1) particularly preferably has a primary hydroxy group at a terminal.

According to one embodiment, the equivalent ratio of the amino groups in the polyamine compound (b2) to the hydroxy groups in the polyol compound (b1) (hereinafter, also referred to as "amino group/hydroxy group ratio") is preferably from 1.5 to 6. Accordingly, the rate of curing reaction can be appropriately set, and the adhesive strength and the elongation at break can be improved in a well-balanced manner. The equivalent ratio is preferably from 1.5 to 4.

According to one embodiment, a ratio of the mass of the polyol compound (a3) reacted with the raw material polyisocyanate to the mass of the polyol compound (b1) is preferably 1 or less from the perspective of adjusting the physical properties of the cured product.

The main agent (A) and the curing agent (B) described above each may further contain, if necessary, various known additives, such as fillers, curing catalysts, plasticizers, anti-aging agents, antioxidants, pigments (dyes), thixotropic agents, ultraviolet absorbers, flame retardants, surfactants (including leveling agents), dispersing agents, dehydrating agents, adhesion promoters, and antistatic agents, in a range that does not inhibit the object of the present invention.

The main agent (A) preferably contains at least one selected from the group consisting of fillers, anti-aging agents, colorants, viscosity modifiers, and plasticizers.

The curing agent (B) preferably contains at least one selected from the group consisting of fillers, anti-aging agents, colorants, viscosity modifiers, plasticizers, and polyhydric alcohols having a number average molecular weight of less than 500. The polyhydric alcohols having a number average molecular weight of less than 500 are used as components for adjusting the physical properties of the cured product by the curing agent (B). For example, the low-molecular-weight polyhydric alcohols described above can be used as the polyhydric alcohols having a number average molecular weight of less than 500. According to one embodiment, the number average molecular weight of the polyhydric alcohols is preferably 200 or less. The number of hydroxy groups contained in a molecule of the polyhydric alcohol is, for example, from 2 to 4. In the curing agent (B), preferably from 5 to 20 mass% of the polyhydric alcohol is contained.

The adhesive composition needs not include a catalyst such as an organometallic compound, a tertiary amine, or the like. That is, according to one embodiment, the adhesive composition is preferably free of a catalyst such as an organometallic compound, a tertiary amine, or the like.

Silane Compound (X)

The adhesive composition contains a silane compound (X) in at least one of the main agent (A) or the curing agent (B). Since the adhesive composition contains the silane compound (X), the effect of improving adhesive strength of the cured product to metals can be achieved. Furthermore, by formation of a covalent bond between the silane compound (X) and a metal in a state where compatibility of the adhesive with a metal is increased by the (meth)acrylic compound (a2), even higher effect of improving adhesive strength can be achieved.

The silane compound (X) is preferably contained in an agent that does not contain a component having a high reactivity with the silane compound (X), of the main agent (A) and the curing agent (B). Accordingly, it is possible to avoid reaction between the silane compound (X) with the component before mixing the main agent (A) and the curing agent (B).

From the perspective of enhancing reactivity with the components in the main agent (A) and the curing agent (B), the silane compound (X) preferably has one functional group selected from an isocyanate group, an amino group, an epoxy group, a mercapto group, an isocyanurate group, a ketimine group, and the like in a molecule. Among these, from the perspective of bonding a soft segment in the cured product with a metal and enhancing the adhesive strength, a silane compound having at least one isocyanate group in a molecule is preferred. The isocyanate group-containing silane compound is contained in the main agent (A). The number of functional groups contained in the silane compound (X) is preferably from 1 to 3.

According to one embodiment, the functional group is preferably bonded to a silicon atom via an alkylene group. The number of carbons in the alkylene group is preferably from 1 to 5 and, for example, a methylene group, an ethylene group, or a propylene group is used.

According to one embodiment, from the perspective of enhancing reactivity with metals, the silane compound (X) preferably has at least one other functional group such as an alkoxy group, in addition to the functional group described above. Preferably, the functional group is bonded to a silicon atom, and 1 to 3 of the functional groups are contained in the silane compound (X). The number of carbons of the alkoxy group is preferably from 1 to 3 and, for example, a methoxy group or an ethoxy group is preferably used.

Examples of the silane compound (X) having an isocyanate group include 3-isocyanatopropyltriethoxy silane, 3-isocyanatopropyltriethoxy silane, 3-isocyanatopropylmethyldimethoxysilane, and 3-isocyanatopropylmethyldiethoxysilane.

Examples of the silane compound (X) having an amino group include N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, and N-(vinylbenzyl)-2-aminoethyl-3-aminopropyltrimethoxysilane.

Examples of the silane compound (X) having an epoxy group include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane.

Examples of the silane compound (X) having a mercapto group include 3-mercaptopropylmethyldimethoxysilane and 3-mercaptopropyltrimethoxysilane.

Examples of the silane compound (X) having an isocyanurate group include tris(3-trimethoxysilylpropyl)isocyanurate.

Examples of the silane compound (X) having a ketimine group include 3-trimethoxysilyl-N-(1,3-dimethyl-butylidene)propylamine.

According to the adhesive composition of the present embodiment, excellent physical properties are exhibited for both of the adhesive strength and the elongation at break. Specifically, the adhesive strength is 10 MPa or greater, and the elongation at break is 100% or greater. Such physical properties of the cured product include a degree of adhesive strength corresponding to the adhesive strength of an epoxy resin-based adhesive while the elongation at break is equal to or similar to that of a known polyurethane-based adhesive. The cured product having such properties is suitable for, for example, bonding components of a structural member such as a body of an automobile.

The adhesive strength is preferably 15 MPa or greater, and more preferably 20 MPa or greater. The upper limit value of the adhesive strength is not particularly limited and, for example, is approximately 80 MPa.

The elongation at break is preferably 150% or greater, more preferably 200% or greater, and even more preferably 250% or greater. The upper limit of the elongation at break is not particularly limited, but is, for example, approximately 500%.

Furthermore, according to the adhesive composition of the present embodiment, excellent strength at break is exhibited. Specifically, the strength at break is 10 MPa or greater, preferably 15 MPa or greater, more preferably 20 MPa or greater, and even more preferably 25 MPa or greater. The upper limit of the strength at break is not particularly limited, but is, for example, approximately 100 MPa.

The adhesive composition of the present embodiment is not limited to, for example, a body of an automobile, and is used for bonding components of various structural members. In addition to use as an adhesive, the adhesive composition of the present embodiment can be used, for example, as paint, waterproof material, flooring material, elastomer, artificial leather, spandex, and the like.

Method for Producing Adhesive Composition

A method for producing an adhesive composition according to one embodiment includes preparing the main agent (A) and preparing the curing agent (B).

In the preparation of the main agent (A), a urethane prepolymer (a1) is produced by reacting a raw material polyisocyanate and a polyol compound (a3) so that the index is from 2.05 to 12 and the polyol compound (a3) is completely converted into monomer units of the urethane prepolymer (a1), and then a (meth)acrylic compound (a2) is added to this. Accordingly, a main agent (A) containing the urethane prepolymer (a1), the (meth)acrylic compound (a2), and the remaining polyisocyanate (a4) is produced. Note that the raw material polyisocyanate, the polyol compound (a3), the urethane prepolymer (a1), the remaining polyisocyanate (a4), and the (meth)acrylic compound (a2) are respectively identical to the raw material polyisocyanate, the polyol compound (a3), the urethane prepolymer (a1), the remaining polyisocyanate (a4), and the (meth)acrylic compound (a2) described above.

In the preparation of the curing agent (B), the curing agent (B) containing a polyol compound (b1) and a polyamine compound (b2) is prepared. Note that the polyol compound (b1) and the polyamine compound (b2) are, respectively, configured identical to the polyol compound (b1) and the polyamine compound (b2) described above.

In the present production method, a silane compound (X) is further added in at least one of the preparation of the main agent (A) or the preparation of the curing agent (B).

The adhesive composition described above can be produced using the production method described above.

Experiment

To study the effects of embodiments of the present invention, adhesive compositions were prepared based on the blended amounts listed in Table 1 and Table 2 and, the cured products thereof were measured for their strength at break, elongation at break, and adhesive strength to each of an aluminum material and a steel material.

Each of the urethane prepolymers 1 to 5 was prepared as described below, the (meth)acrylic compound (a2), the silane compound (X), and the additives listed in the tables were added, and thus a main agent was prepared. In addition, raw materials shown in the table were mixed to prepare a curing agent.

Synthesis of Urethane Prepolymer 1

100 g of polytetramethylene ether glycol and 100 g of 4,4'-diphenylmethane diisocyanate (index 4.0) were stirred for 4 hours at 80°C in a nitrogen atmosphere and reacted, and thus a urethane prepolymer 1 was synthesized.

Synthesis of Urethane Prepolymer 2

100 g of polytetramethylene ether glycol and 150 g of 4,4'-diphenylmethane diisocyanate (index 6.0) were stirred for 4 hours at 80°C in a nitrogen atmosphere and reacted, and thus a urethane prepolymer 2 was synthesized.

Synthesis of Urethane Prepolymer 3

100 g of polycarbonate diol and 100 g of 4,4'-diphenylmethane diisocyanate (index 4.0) were stirred for 4 hours at 80°C in a nitrogen atmosphere and reacted, and thus a urethane prepolymer 3 was synthesized.

Synthesis of Urethane Prepolymer 4

100 g of polytetramethylene ether glycol and 50 g of 4,4'-diphenylmethane diisocyanate (index 2.0) were stirred for 4 hours at 80°C in a nitrogen atmosphere and reacted, and thus a urethane prepolymer 4 was synthesized.

Synthesis of Urethane Prepolymer 5

100 g of polytetramethylene ether glycol and 105 g of dicyclohexylmethane-4,4'-diisocyanate (index 4.0) were stirred for 12 hours at 80°C in a nitrogen atmosphere and reacted, and thus a urethane prepolymer 5 was synthesized.
As the polytetramethylene ether glycol, polycarbonate diol, dicyclohexylmethane-4,4'-diisocyanate, and 4,4'-diphenylmethane diisocyanate used in the preparation of the urethane prepolymers 1 to 5 described above, those described below were used.

- Polytetramethylene ether glycol:
  PTMG1000 (number average molecular weight: 1000), available from Mitsubishi Chemical Corporation
- Polycarbonate diol:
  Duranol T6001 (number average molecular weight: 1000), available from Asahi Kasei Corporation
- Dicyclohexylmethane-4,4'-diisocyanate:
  Desmodur W (molecular weight: 262), available from Covestro AG
- 4,4'-Diphenylmethane diisocyanate:
  Millionate MT (molecular weight: 250), available from Tosoh Corporation

In the table, the values of the urethane prepolymers 1 to 5 each indicate a total amount of the urethane prepolymer (a1) and the remaining polyisocyanate (a4). As raw materials other than the urethane prepolymers 1 to 5 listed in the tables, those described below were used. In the table, the amount of the raw material is indicated by parts by mass.

- Acryl 1: Dimethacrylate having methacryloyl groups at both terminals of EO adduct of bisphenol A, LIGHT ESTER BP-2EMK, available from Kyoeisha Chemical Co., Ltd.
- Acryl 2: Neopentyl glycol diacrylate, LIGHT ACRYLATE NP-A, available from Kyoeisha Chemical Co., Ltd.
- Acryl 3: LIGHT ACRYLATE PO-A, available from Kyoeisha Chemical Co., Ltd.
- Silane 1: 3-Isocyanatopropyltrimethoxysilane, Siliquest A-Link 35, available from Momentive Performance Materials
- Silane 2: N-ethyl-3-aminoisobutyltrimethoxysilane, Siliquest A-Link 15, available from Momentive Performance Materials
- Carbon black: 200 MP, available from NSCC Carbon Co., Ltd.
- Calcium carbonate 1: heavy calcium carbonate, Super S, available from Maruo Calcium Co., Ltd.
- Plasticizer: diisononyl phthalate, available from Jay Plus, Inc.
- Polyol 1: Polypropylene glycol (number average molecular weight: 2000 to 3000), SANNIX PL-2100, available from Sanyo Chemical Industries, Ltd.
- Polyol 2: Polyisoprene polyol, Poly ip, available from Idemitsu Kosan Co., Ltd.
- Polyamine: diethylmethylbenzenediamine, DETDA, available from Mitsui Fine Chemicals, Inc.
- Calcium carbonate 2: light calcium carbonate, KALFAIN 200, available from Maruo Calcium Co., Ltd.
- Silica: Reolosil QS-102S, available from Tokuyama Corporation

The isocyanate group/amino group ratio and the isocyanate group/hydroxy group ratio are also listed in the table. Note that, although not shown in the tables, the amino group/hydroxy group ratio was adjusted in a range of from 1.5 to 6.
The main agent and curing agent prepared were mixed in a mass ratio of 1:1, and the strength at break, the elongation at break, and the adhesive strength were measured as described below.

Strength at Break, Elongation at Break

A tensile test was conducted in accordance with JIS K6251 using a dumbbell-shaped No. 3 test piece, and the tensile strength (strength at break) and elongation at the time of rupture (elongation at break) were measured under conditions of a temperature of 20°C and a crosshead speed (tensile speed) of 200 mm/min. Marked lines for measurement of the elongation at break were marked 20 mm apart. As a result, when the strength at break was 10 MPa or greater, the strength at break was evaluated as excellent, and when the elongation at break was 100% or greater, the elongation at break was evaluated as excellent.

Adhesive Strength

By using test pieces each including aluminum or steel as an adherend, tensile shear test was conducted in accordance with JIS K6850, and tensile lap-shear strength (adhesive strength) was measured under conditions of a temperature of 20°C and a crosshead speed of 50 mm/min. As the result, when the adhesive strength was 10 MPa or greater, the adhesive strength was evaluated as excellent.

[Table 1]

| | | Example | | | | | | |
|---|---|---|---|---|---|---|---|---|
| | | 1 | 2 | 3 | 4 | 5 | 6 | 7 |
| Main agent (A) | Urethane prepolymer 1 | 40 | | | 40 | 40 | 40 | 40 |
| | Urethane prepolymer 2 | | 40 | | | | | |
| | Urethane prepolymer 3 | | | 40 | | | | |
| | Urethane prepolymer 4 | | | | | | | |
| | Urethane prepolymer 5 | | | | | | | |
| | Carbon black | 4 | 4 | 4 | 4 | 4 | 4 | 4 |
| | Calcium carbonate 1 | 15 | 15 | 15 | 15 | 15 | 3 | 15 |
| | Plasticizer | 3 | 3 | 3 | 3 | 7 | | 7 |
| | Acryl 1 | 5 | 5 | 5 | 5 | 1 | 20 | 5 |
| | Acryl 2 | | | | | | | |
| | Acryl 3 | | | | | | | |
| | Silane 1 | 2 | 2 | 2 | 2 | 2 | 2 | |
| | Total | 69 | 69 | 69 | 69 | 69 | 69 | 71 |
| | Index | 4 | 6 | 4 | 4 | 4 | 4 | 4 |
| Curing agent (B) | Polyol 1 | 29 | 23 | 29 | | 29 | 29 | 29 |
| | Polyol 2 | | | | 29 | | | |
| | Polyamine | 8 | 5 | 8 | 8 | 8 | 8 | 8 |
| | Calcium carbonate 2 | 27 | 36 | 27 | 27 | 27 | 27 | 27 |
| | Silica | 5 | 5 | 5 | 5 | 5 | 5 | 5 |
| | Silane 2 | | | | | | | 2 |
| | Total | 69 | 69 | 69 | 69 | 69 | 69 | 71 |
| Isocyanate group/active hydrogen group ratio | | 1.07 | 2.70 | 1.07 | 1.06 | 1.07 | 1.07 | 1.07 |
| Isocyanate group/amino group ratio | | 1.34 | 3.57 | 1.34 | 1.34 | 1.34 | 1.34 | 1.34 |
| Strength at break (MPa) | | 26 | 28 | 30 | 22 | 27 | 25 | 24 |
| Elongation at break (%) | | 290 | 280 | 250 | 260 | 280 | 250 | 280 |
| Adhesive strength, aluminum (MPa) | | 21 | 20 | 21 | 18 | 19 | 21 | 19 |
| Adhesive strength, steel (MPa) | | 20 | 23 | 22 | 19 | 18 | 19 | 21 |

[Table 2]

| | | | Comparative Example | | | | | | |
|---|---|---|---|---|---|---|---|---|---|
| | | | 1 | 2 | 3 | 4 | 5 | 6 | 7 |
| Main agent (A) | | Urethane prepolymer 1 | 40 | 40 | 40 | 40 | | | 40 |
| | | Urethane prepolymer 2 | | | | | | | |
| | | Urethane prepolymer 3 | | | | | | | |
| | | Urethane prepolymer 4 | | | | | 40 | | |
| | | Urethane prepolymer 5 | | | | | | 40 | |
| | | Carbon black | 4 | 4 | 4 | 4 | 4 | 4 | 4 |
| | | Calcium carbonate 1 | 15 | 15 | 15 | 15 | 15 | 15 | 15 |
| | | Plasticizer | 10 | 5 | 8 | 3 | 3 | 3 | 3 |
| | | Acryl 1 | | 5 | | | 5 | 5 | |
| | | Acryl 2 | | | | 5 | | | |
| | | Acryl 3 | | | | | | | 5 |
| | | Silane 1 | | | 2 | 2 | 2 | 2 | 2 |
| | | Total | 69 | 69 | 69 | 69 | 69 | 69 | 69 |
| | | Index | 4 | 4 | 4 | 4 | 2 | 4 | 4 |
| Curing agent (B) | | Polyol 1 | 29 | 29 | 29 | 29 | 28 | 29 | 29 |
| | | Polyol 2 | | | | | | | |
| | | Polyamine | 8 | 8 | 8 | 8 | 3 | 8 | 8 |
| | | Calcium carbonate 2 | 27 | 27 | 27 | 27 | 33 | 27 | 27 |
| | | Silica | 5 | 5 | 5 | 5 | 5 | 5 | 5 |
| | | Silane 2 | | | | | | | |
| | | Total | 69 | 69 | 69 | 69 | 69 | 69 | 69 |
| Isocyanate group/active hydrogen group ratio | | | 1.07 | 1.07 | 1.07 | 1.07 | 0.72 | 1.05 | 1.05 |
| Isocyanate group/amino group ratio | | | 1.34 | 1.34 | 1.34 | 1.34 | 1.19 | 1.31 | 1.31 |
| Strength at break (MPa) | | | 24 | 25 | 24 | 17 | 8 | 18 | 21 |
| Elongation at break (%) | | | 240 | 250 | 250 | 220 | 150 | 220 | 180 |
| Adhesive strength, aluminum (MPa) | | | 6 | 8 | 8 | 9 | 6 | 9 | 7 |
| Adhesive strength, steel (MPa) | | | 7 | 9 | 8 | 9 | 6 | 8 | 8 |

From the comparison between Examples 1 to 7 and Comparative Examples 1 to 7, it was found that an adhesive composition containing a urethane polyprepolymer (a1) produced by using a raw material polyisocyanate having at least one aromatic ring in a molecule and a polyol compound (a3) and setting an index to 2.05 to 12, a (meth)acrylic compound (a2) having at least two aromatic rings in a molecule, and a remaining polyisocyanate (a4) in a main agent, containing a polyol compound (b1) and a polyamine compound (b2) in a curing agent, and containing a silane compound (X) in at least one of the main agent (A) or the curing agent (B) can provide a cured product that can provide excellent adhesive strength and elongation at break in a compatible manner. In particular, it was found that a polyurethane-based adhesive having excellent adhesive strength to metal materials can be obtained.

Furthermore, according to the adhesive composition, it was found that a polyurethane-based adhesive having excellent strength at break can be obtained. That is, according to the adhesive composition, it was found that excellent tensile properties, such as elongation at break and strength at break, and excellent adhesive strength can be provided in a compatible manner.

Note that, even when the isocyanate group/active hydrogen group ratio was changed in a range of from 0.8 to 4, a ratio of change of the adhesive strength and the elongation at break was suppressed to within ± 20% with respect to the adhesive strength and the elongation at break when the mixing ratio (mass ratio) of the main agent (A) to the curing agent (B) was 1:1.

The foregoing has been a description of the two-part curable adhesive composition according to embodiments of the present invention. However, the present invention is definitely not limited to the above embodiments and examples, and may be improved or modified in various ways within the scope of the present invention.

**Claims**

1. A two-part curable adhesive composition comprising:

   a main agent (A) containing a urethane prepolymer (a1) and a (meth)acrylic compound (a2) having at least two aromatic rings in a molecule, and
   a curing agent (B) containing a polyol compound (b1) and a polyamine compound (b2),
   the urethane prepolymer (a1) being obtained by reacting a raw material polyisocyanate and a polyol compound (a3) having at least one hydroxy group in a molecule, an equivalent ratio of isocyanate groups in the raw material polyisocyanate to a hydroxy group in the polyol compound (a3) is from 2.05 to 12, the polyol compound (a3) being completely converted into monomer units of the urethane prepolymer (a1),
   the raw material polyisocyanate is an isocyanate having at least one aromatic ring in a molecule,
   the main agent (A) further containing, in addition to the urethane prepolymer (a1), a remaining polyisocyanate (a4) which is a remainder of the raw material polyisocyanate that has not been reacted with the polyol compound (a3), and
   at least one of the main agent (A) or the curing agent (B) containing a silane compound (X).

2. The two-part curable adhesive composition according to claim 1, wherein

   an equivalent ratio of isocyanate groups in the main agent (A) to active hydrogen groups in the curing agent (B) is from 0.8 to 4, and
   an equivalent ratio of the isocyanate groups in the main agent (A) to amino groups in the polyamine compound (b2) is from 1.2 to 6.

3. The two-part curable adhesive composition according to claim 1 or 2, wherein the polyol compound (a3) is at least one selected from the group consisting of polyester polyol, polytetramethylene ether glycol, polycarbonate polyol, polycaprolactone polyol, and partially modified products obtained by partially modifying these.

4. The two-part curable adhesive composition according to any one of claims 1 to 3, wherein the polyol compound (b1) is at least one selected from the group consisting of polyoxypropylene glycol, polybutadiene polyol, polyisoprene polyol, polyacrylic polyol, and partially modified products obtained by partially modifying these.

5. The two-part curable adhesive composition according to any one of claims 1 to 4, wherein the silane compound (X) is a silane compound having at least one isocyanate group in a molecule.

6. The two-part curable adhesive composition according to any one of claims 1 to 5, wherein from 0.1 to 30 mass% of the (meth)acrylic compound (a2) is contained in the two-part curable adhesive composition.

7. The two-part curable adhesive composition according to any one of claims 1 to 6, wherein a tensile lap-shear strength in accordance with JIS K 6850 of a cured product obtained by curing the two-part curable adhesive composition is 10 MPa or greater.

<table>
<tr><td colspan="2" align="center">**INTERNATIONAL SEARCH REPORT**</td><td colspan="2">International application No.<br>PCT/JP2021/013074</td></tr>
</table>

**A.   CLASSIFICATION OF SUBJECT MATTER**
Int.Cl.  C09J4/02(2006.01)i, C09J11/06(2006.01)i, C09J175/04(2006.01)i
FI: C09J175/04, C09J11/06, C09J4/02

According to International Patent Classification (IPC) or to both national classification and IPC

**B.   FIELDS SEARCHED**

Minimum documentation searched (classification system followed by classification symbols)
Int.Cl.  C09J4/02, C09J11/06, C09J175/04

Documentation searched other than minimum documentation to the extent that such documents are included in the fields searched
    Published examined utility model applications of Japan     1922-1996
    Published unexamined utility model applications of Japan   1971-2021
    Registered utility model specifications of Japan           1996-2021
    Published registered utility model applications of Japan   1994-2021

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 2016-74840 A (THREE BOND CO., LTD.) 12 May 2016 (2016-05-12), entire text, all drawings | 1-7 |
| A | JP 2014-522426 A (ASHLAND INC.) 04 September 2014 (2014-09-04), entire text, all drawings | 1-7 |
| A | WO 2014/157151 A1 (MITSUBISHI GAS CHEMICAL COMPANY, INC.) 02 October 2014 (2014-10-02), entire text, all drawings | 1-7 |
| A | JP 3-63060 A (SANYO CHEMICAL IND LTD.) 19 March 1991 (1991-03-19), entire text, all drawings | 1-7 |
| P, A | JP 2020-55921 A (THE YOKOHAMA RUBBER CO., LTD.) 09 April 2020 (2020-04-09), entire text, all drawings | 1-7 |

☐  Further documents are listed in the continuation of Box C.          ☒  See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>    07 May 2021 | Date of mailing of the international search report<br>    25 May 2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.

PCT/JP2021/013074

| | | |
|---|---|---|
| JP 2016-74840 A | 12 May 2016 | (Family: none) |
| JP 2014-522426 A | 04 September 2014 | US 2012/0295104 A1<br>entire text, all drawings<br>EP 2709842 A1<br>KR 10-2014-0053904 A<br>CN 104039852 A |
| WO 2014/157151 A1 | 02 October 2014 | US 2016/0017095 A1<br>entire text, all drawings<br>EP 2980117 A1<br>CN 105143307 A<br>KR 10-2015-0135200 A |
| JP 3-63060 A | 19 March 1991 | (Family: none) |
| JP 2020-55921 A | 09 April 2020 | (Family: none) |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017099196 A